(19) **Europäisches Patentamt**
**European Patent Office**
**Office européen des brevets**

(11) **EP 4 043 238 A1**

(12) **EUROPEAN PATENT APPLICATION**
published in accordance with Art. 153(4) EPC

(43) Date of publication:
**17.08.2022 Bulletin 2022/33**

(21) Application number: **20874092.8**

(22) Date of filing: **15.09.2020**

(51) International Patent Classification (IPC):
**B60C 5/01** *(2006.01)*      **B60C 9/18** *(2006.01)*

(52) Cooperative Patent Classification (CPC):
**B60C 5/01; B60C 9/18**

(86) International application number:
**PCT/JP2020/034952**

(87) International publication number:
**WO 2021/070580 (15.04.2021 Gazette 2021/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.10.2019 JP 2019185317**

(71) Applicant: **SUMITOMO RUBBER INDUSTRIES, Ltd.**
**Kobe-shi, Hyogo 651-0072 (JP)**

(72) Inventor: **ANDO, Kanta**
**Kobe-shi, Hyogo 651-0072 (JP)**

(74) Representative: **TBK**
**Bavariaring 4-6**
**80336 München (DE)**

(54) **PNEUMATIC TIRE**

(57) A pneumatic tire that can achieve both the steering stability and the ride comfort, and can sufficiently improve the material recyclability. There are included a tire framework member 2 comprising bead portions 5, sidewall portions 6 and an under tread portion 7, and a ground contacting tread component 3 disposed outside the under tread portion 7. The ground contacting tread component 3 is made of a first resin material M1. the sidewall portions 6 and the under tread portion 7 are made of a second resin material M2. The bead portions are made of a third resin material M3. The tensile elastic moduli E1 to E3 of the first to third resin materials M3, respectively, satisfy E1 < E2 < E3.

FIG. 1

EP 4 043 238 A1

**Description**

**Technical Field**

The present invention relates to a pneumatic tire in which a tire framework member is made of a resin material.

**Background of the art**

Conventional pneumatic tires have secured tire basic characteristics by using vulcanized rubber and cord materials such as organic fibers and steel fibers. However, vulcanized rubber has a problem such that it is difficult to recycle the material. In addition, the use of cord materials, especially carcass cords, has problems of complicating the manufacturing process and increasing manufacturing costs.

Therefore, Patent Document 1 below proposes a carcassless tire in which a tire framework member is made of a resin material. The tire framework member comprises a pair of bead portions, a pair of side portions extending from the pair of bead portions, and a crown portion connecting the pair of side portions. And on the crown portion, a tread made of vulcanized rubber is disposed.

**Prior Art Document**

**Patent Document**

Patent Document 1: Japanese Patent No. 6138695

**Summary of the Invention**

**Problems to be solved by the Invention**

In the tire proposed above, however, since the tire framework member is made of a single resin material, it is difficult to achieve both steering stability and ride comfort. Further, since the tread is made of vulcanized rubber, there is a problem such that the material recyclability cannot be sufficiently improved.

The present invention is based on that the ground contacting tread component, the bead portion, the sidewall portion, and the under tread portion are made of resin materials having different tensile elastic moduli, and
a problem is to provide a pneumatic tire in which the material recyclability can be sufficiently improved while achieving both the steering stability and the ride comfort

**Means of solving the Problems**

The present invention is a pneumatic tire which comprises

a toroidal tire framework member comprising a pair of bead portions, a pair of sidewall portions, and an under tread portion connecting the pair of sidewall portions, and
a ground contacting tread component disposed outside the under tread portion in the tire radial direction,
the ground contacting tread component is made of a first resin material, the pair of sidewall portions and the under tread portion are made of a second resin material,
the pair of bead portions are made of a third resin material, and the tensile elastic moduli E1 to E3 of the first to third resin materials, respectively, satisfy the following equation (1)

$$E1 < E2 < E3 \ ... \ (1).$$

In the pneumatic tire according to the present invention, it is preferable that a tread reinforcing component is disposed between the ground contacting tread component and the under tread portion.

In the pneumatic tire according to the present invention, it is preferable that the tread reinforcing component includes a cord reinforcing layer in which reinforcing cords are arranged.

In the pneumatic tire according to the present invention, it is preferable that the tread reinforcing component includes a resin reinforcing layer made of a fourth resin material different from the first to third resin materials.

In the pneumatic tire according to the present invention, it is preferable that the following equations (2) and (3) are further satisfied,

$$10 \times E1 > E2 \ldots (2)$$

$$10 \times E2 > E3 \ldots (3).$$

In the pneumatic tire according to the present invention, it is preferable that the tensile elastic modulus E1 is in a range of 5 to 20 MPa.

In the pneumatic tire according to the present invention, it is preferable that the tensile elastic modulus E2 is in a range of 10 to 100 MPa.

In the pneumatic tire according to the present invention, it is preferable that the tensile elastic modulus E3 is in a range of 50 to 500 MPa.

**Effects of the Invention**

In the pneumatic tire of the present invention, the ground contacting tread component is made of the first resin material, the sidewall portions and the under tread portion are made of the second resin material, and the bead portions are made of the third resin material. Moreover, the tensile elastic moduli E1 to E3 of the first to third resin materials has the relationship of E1 < E2 < E3.

In particular, by making the tensile elastic modulus E3 of the third resin material larger than the tensile elastic moduli E1 and E2 of the first and second resin materials, the steering stability and the shape retention ability can be enhanced.

Further, since the tensile elastic modulus E2 of the second resin material is smaller than the tensile elastic modulus E3 of the third resin material, it is possible improve the ride comfort.

Further, by adopting the first resin material having the smallest tensile elastic modulus for the ground contacting tread component, the followability to the road surface is improved to improve the grip, and it becomes possible to improve the material recyclability as compared to the conventional carcassless tire.

**Brief Description of the Drawings**

[FIG. 1] a cross-sectional view showing an embodiment of a pneumatic tire of the present invention.

[Fig. 2] a cross-sectional view enlargedly showing the bead portion.

[FIG. 3] a cross-sectional view enlargedly showing the tread reinforcing component.

[FIG. 4] a cross-sectional view showing another example of the tread reinforcing component.

[FIG. 5] (a) to (c) are conceptual diagrams showing a method for manufacturing the pneumatic tire.

**Mode for carrying out the Invention**

Hereinafter, embodiments of the present invention will be described in detail.

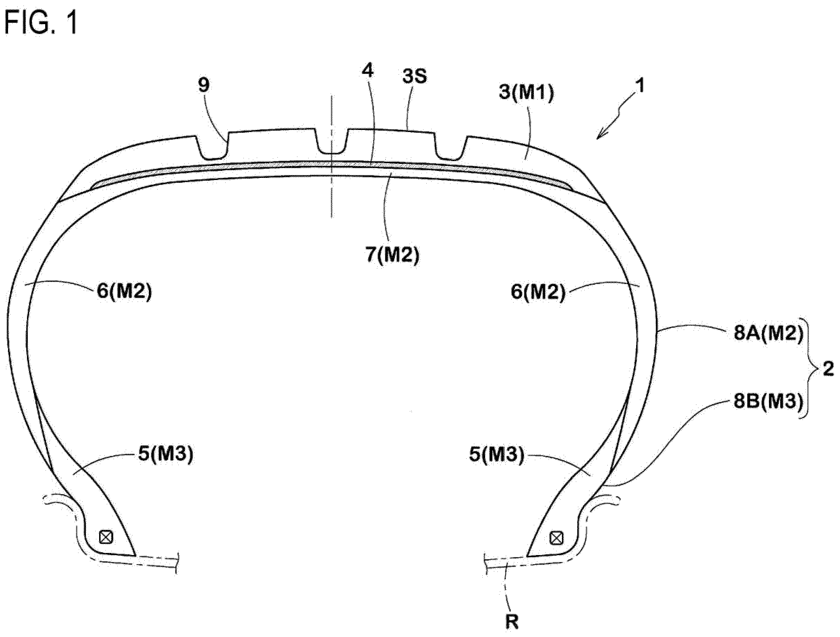

As shown in FIG. 1, a pneumatic tire 1 of the present embodiment (hereinafter, may be simply referred to as the tire 1) is is configured to include a toroidal tire framework member 2 made of a resin material, and a ground contacting tread component 3 made of a resin material.

In this example, there is shown a case where the pneumatic tire 1 is a tire for passenger cars.

However, the present invention is not limited to this, and can be applied to tires of various categories such as for motorcycles, light trucks, large trucks and the like.

The tire framework member 2 comprises a pair of bead portions 5, a pair of sidewall portions 6 extending outwardly in the tire radial direction from the pair of bead portions 5, and an under tread portion 7 connecting the pair of sidewall portions 6. The inner surface of the tire framework member 2 constitutes the tire inner cavity surface.

The bead portion 5 is a portion which fits onto a rim R when mounted on the rim.

The sidewall portion 6 is a portion constituting the side portion of the tire 1, and extends outwardly in the tire radial direction while being curved in an arc shape which is convex toward the outside in the tire axial direction.

The under tread portion 7 is a portion that supports the ground contacting tread component 3, and connects between the outer ends in the tire radial direction, of the sidewall portions 6.

The pair of sidewall portions 6 and the under tread portion 7 are made of a second resin material M2. Further, the pair of bead portions 5 are made of a third resin material M3.

In other words, the tire framework member 2 comprises a first base body 8A made of the second resin material M2 and a second base body 8B made of the third resin material M3. The first base body 8A forms the pair of sidewall portions 6 and the under tread portion 7.

The second base body 8B forms the pair of bead portions 5.

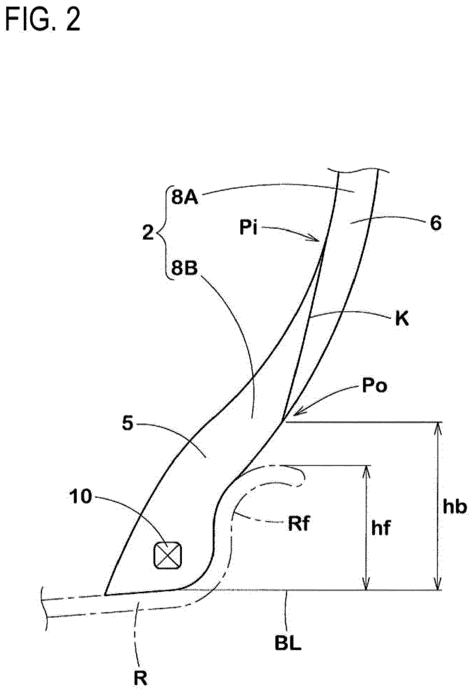

It is preferable for increasing the bond strength between the first base body 8A and the second base body 8B that the interfacial boundary K between the first base body 8A and the second base body 8B is inclined with respect to a tire axial direction line as shown in FIG. 2. In particular, it is preferable that the intersection Po of the outer surface of the tire framework member 2 and the interfacial boundary K is located inside in the tire radial direction than the intersection Pi of the inner surface of the tire framework member 2 and the interfacial boundary K. Thereby, the exposed area of the outer surface of the second base body 8B is reduced, which helps to suppress damage such as cracks due to tire deformation.

It is preferable that the height hb in the tire radial direction, of the intersection Po from the bead baseline BL is in a range of 1.0 to 3.0 times a rim flange height hf. If less than 1.0 times, it becomes difficult to sufficiently improve the steering stability. On the contrary, if more than 3.0 times, the effect of suppressing damage such as cracks is reduced, and it is disadvantageous for the ride comfort performance. The rim flange height hf is defined as the height in the tire radial direction, of the top of the rim flange Rf from the bead baseline BL.

In this example, an annular bead core 10 is disposed in the second base body 8B in order to increase the fitting force with the rim R. As the bead core 10, a tape bead structure and a single wind structure can be appropriately adopted. In the tape bead structure, the bead core 10 is formed by spirally winding a band body which is an array of bead wires aligned parallel to each other and topped with a rubber or resin material, from the inside to the outside in the radial direction. In the single wind structure, the bead core 10 is formed by continuously winding one bead wire in a spiral and multi-row multi-layer manner. As the bead wire, a steel cord is preferably used, but an organic fiber cord may also be used. Depending on the category of the tire and the like, it is also possible not to provide the bead core 10.

As shown in FIG. 1, the ground contacting tread component 3 is disposed outside the under tread portion 7 in the tire radial direction. In this example, there is shown a case where the tread reinforcing component 4 is further disposed between the ground contacting tread component 3 and the under tread portion 7.

The ground contacting tread component 3 is a portion corresponding to a tread rubber, and has the ground contacting surface 3S for contacting with the road surface. In the ground contacting surface 3S, tread grooves 9 for enhancing wet performance may be formed in various patterns. The ground contacting tread component 3 is made of the first resin material M1.

The tread reinforcing component 4 hoops the under tread portion 7 to suppress its movement. Thereby, the tire shape, especially the ground contact shape, is stabilized, and excellent running performance is exhibited.

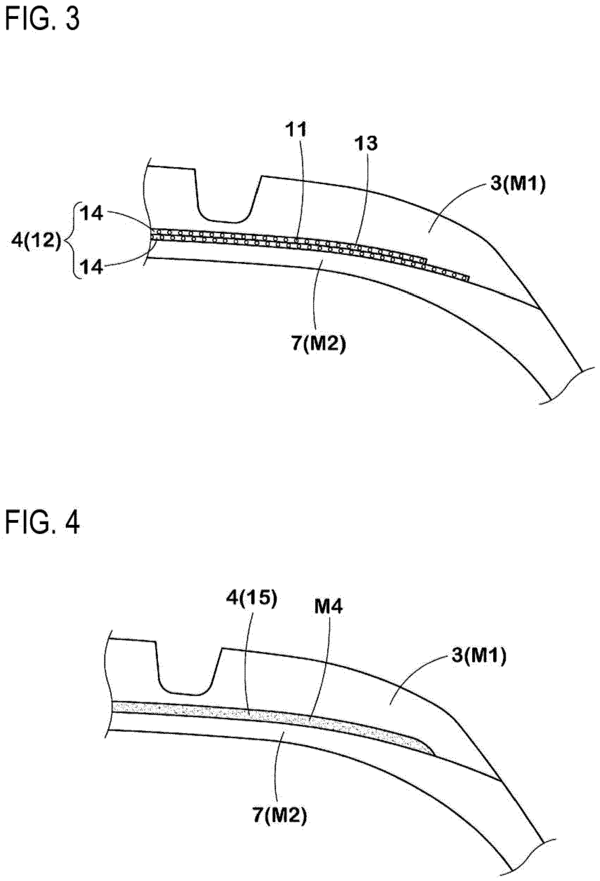

As shown in FIG. 3, the tread reinforcing component 4 in this example is formed from a cord reinforcing layer 12 in which reinforcing cords 11 are arranged. Specifically, the cord reinforcing layer 12 is composed of at least one, for example, two reinforcing plies 14. The reinforcing ply 14 in this example is in the form of a sheet in which an array of the reinforcing cords 11 which are arranged at an angle of, for example, 10 to 45 degrees with respect to the tire circumferential direction, is covered with a topping material 13 made of a rubber or resin material. When there are a plurality of the reinforcing plies 14, it is preferable that the direction of inclination of the reinforcing cords 11 is different between the plies. The reinforcing ply 14 may be an array of the reinforcing cords 11 spirally wound in the tire circumferential direction which is coated with the topping material 13.

As the topping material 13 of the reinforcing ply 14, a resin material can be suitably used from the viewpoint of adhesiveness to the ground contacting tread component 3 and the under tread portion 7.

As shown in FIG. 4, the tread reinforcing component 4 may be a resin reinforcing layer 15 made of a fourth resin material M4 different from the first to third resin materials M1 to M3. In the case of the resin reinforcing layer 15, it is preferable to include a fibrous filler in the fourth resin material M4, and it is more preferable to orient the filler in the tire circumferential direction.

Suitable fillers include carbon fibers, glass fibers, aramid fibers, cellulose nanofibers (CNF), cellulose nanocrystals (CNC) and the like, and these can be used alone or in combination.

In the present application, the "resin material" includes a thermoplastic resin (including a thermoplastic elastomer) and a thermosetting resin, and does not include rubber.

The "thermosetting resin" is a resin whose material is hardened by increasing the temperature, and examples include, for example, a phenol-based thermosetting resin, a urea-based thermosetting resin, a melamine-based thermosetting resin, an epoxy-based thermosetting resin and the like.

The "thermoplastic resin" means a polymer compound in which the material is softened and flowable as the temperature rises, and its condition becomes relatively hard and strong when cooled. The "thermoplastic resin" includes a thermoplastic elastomer. This "thermoplastic elastomer" has the characteristics such that the material is softened and flowable as the temperature rises, and when cooled, it becomes relatively hard and strong and has rubber-like elasticity.

Considering the elasticity required during running, the moldability at the time of manufacturing and the like, the resin material of the tire 1 is preferably a thermoplastic resin, and more preferably a thermoplastic elastomer.

Examples of the thermoplastic elastomer include polyamide-based thermoplastic elastomers, polyester-based thermoplastic elastomers, polyurethane-based thermoplastic elastomers, polystyrene-based thermoplastic elastomers and polyolefin-based thermoplastic elastomers. These can be used alone or in combination as the first to fourth resin materials M1 to M4.

Here, the first to fourth resin materials M1 to M4 have compositions different from each other. The "different compositions" include a case where the components themselves (including additives) constituting the resin material are different, and a case where the components are the same but their contained amounts are different.

In the tire 1, the tensile elastic moduli E1 to E3 of the first to third resin materials M1 to M3, respectively, satisfy the following expression (1).

$$E1 < E2 < E3 \dots (1)$$

In particular, it is preferable that the tensile elastic moduli E1 to E3 satisfy the following equations (2) and (3).

$$10 \times E1 > E2 \dots (2)$$

$$10 \times E2 > E3 \dots (3)$$

The tensile elastic modulus is a value measured according to the test method described in "Plastics - Determination of tensile properties" of JIS K7161.

In the tire 1 of the present embodiment, as in the expression (1), the tensile elastic modulus E3 of the third resin material M3 is larger than the tensile elastic modulus E2 of the second resin material M2, and the tensile elastic modulus E1 of the first resin material M1. Thereby, it possible to improve the steering stability and the shape retention ability. Further, since the tensile elastic modulus E2 of the second resin material M2 is smaller than the tensile elastic modulus E3 of the third resin material M3, it possible to improve the ride comfort.

Further, by adopting the first resin material M1 having the smallest tensile elastic modulus for the ground contacting tread component 3, the followability to the road surface is improved to improve the grip, and it becomes possible to improve the material recyclability as compared to the conventional tire employing a tread rubber. At this time, there is a possibility that the tread rigidity becomes small, which reduces the stability of the ground contact shape and the steering stability. Therefore, in the present embodiment, the under tread portion 7 is hooped by providing the tread reinforcing component 4, to stabilize the tire shape, particularly the ground contact shape. Thereby, even when the first resin material M1 having the smallest tensile elastic modulus is used for the ground contacting tread component 3, excellent running performance can be exhibited.

In this example, as in the expression (2), the tensile elastic modulus E2 of the second resin material M2 is less than 10 times the tensile elastic modulus E1 of the first resin material M1. Thereby, it is possible to suppress damage such as separation of the ground contacting tread component 3 from the first base body 8A due to the difference in elastic moduli E1 and E2. Similarly, as in the expression (3), the tensile elastic modulus E3 of the third resin material M3 is less than 10 times the tensile elastic modulus E2 of the second resin material M2. Thereby, it is possible to suppress damage such as separation of the second base body 8B from the first base body 8A due to the difference in the elastic moduli E2 and E3.

Here, by setting the tensile elastic modulus E1 to 20 MPa or less, excellent grip performance can be ensured. However, when the tensile elastic modulus E1 is less than 5 MPa, the tread rigidity is reduced and the steering stability is deteriorated.

By setting the tensile elastic modulus E2 to 100 MPa or less, excellent ride comfort can be ensured. However, when the tensile elastic modulus E2 is less than 10 MPa, it becomes difficult to sufficiently secure the shape retention ability of the tire.

By setting the tensile elastic modulus E3 to 50 MPa or more, the lateral rigidity of the tire is increased, and excellent steering stability can be exhibited. However, when the tensile elastic modulus E3 exceeds 500 MPa, the bead portion becomes too hard, and the fitting with the rim R is liable to be deteriorated.

Therefore, in the tire 1, it is preferable that the tensile elastic modulus E1 of the first resin material M1 is in a range of 5 to 20 MPa. It is preferable that the tensile elastic modulus E2 of the second resin material M2 is in a range of 10 to 100 MPa. It is preferable that the tensile elastic modulus E3 of the third resin material M3 is in a range of 50 to 500 MPa.

When the resin reinforcing layer 15 is adopted as the tread reinforcing component 4, the fourth resin material M4 forming the resin reinforcing layer 15 preferably has a tensile elastic modulus of not less than 1000 MPa, and preferably has a tensile strength of not less than 200 MPa.

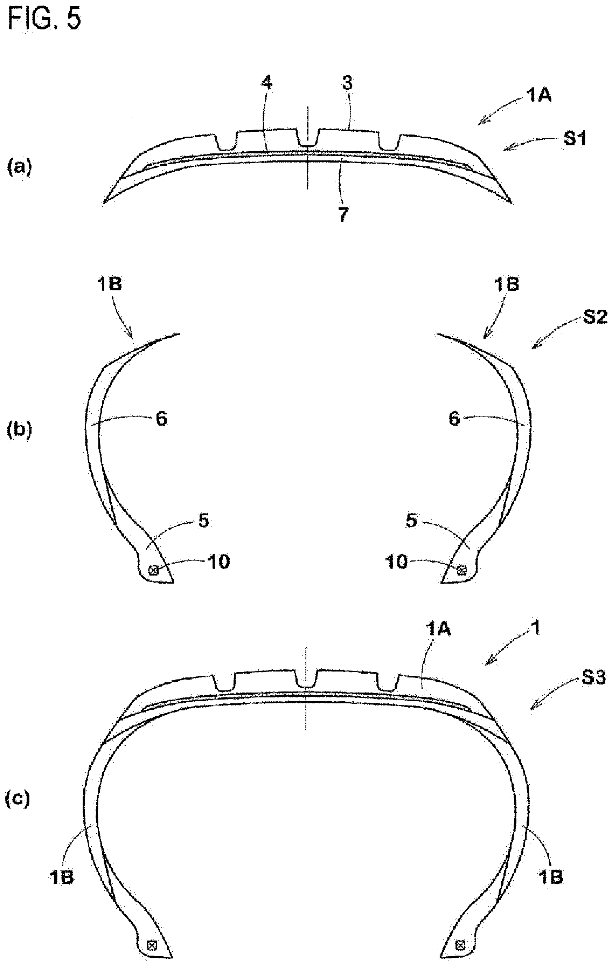

Next, an example of the manufacturing method of the tire 1 of the embodiment will be illustrated. As conceptually shown in FIG. 5 (a) to (c), the manufacturing method of this example comprises

- step S1 of forming a first tire base 1A in which the under tread portion 7, the tread reinforcing component 4 and the ground contacting tread component 3 are integrated,
- step S2 of forming a second tire base 1B in which the sidewall portions 6, the bead portions 5 and the bead cores 10 are integrated, and
- step S3 of forming the tire 1 by joining the first tire base 1A and the second tire base 1B.

In the step S1, when the tread reinforcing component 4 is the cord reinforcing layer 12, after the cord reinforcing layer 12 is formed in advance, the first tire base 1A is formed by performing a composite molding by injecting the first resin material M1 and the first resin material M1 into a cavity in which the cord reinforcing layer 12 is set. When the tread reinforcing component 4 is the resin reinforcing layer 15, the first tire base 1A is formed by performing a composite molding by injecting the first resin material M1, the second resin material M2, and the fourth resin material M4 into a cavity.

In the step S2, after the bead core 10 is formed in advance, the second tire base 1B is formed by performing a composite molding by injecting the second resin material M2 and the third resin material M3 into a cavity in which the bead core 10 is set.

In the step S3, the first tire base 1A and the second tire base 1B are joined by thermal fusion bonding or using an adhesive.

As the adhesive, for example, Aron Alpha EXTRA2000 (registered trademark) manufactured by Toagosei Co., Ltd., Loctite 401J (registered trademark) manufactured by Henkel Japan Ltd., and the like are preferably used.

While detailed description has been made of an especially preferable embodiment of the present invention, the present invention can be embodied in various forms without being limited to the illustrated embodiment.

**Embodiments**

In order to confirm the effects of the present invention, tires (195/65R15) for passenger cars having the structure shown in FIG. 1 were experimentally manufactured based on specifications shown in Tables 1 and 2.

In comparative examples and embodiments, only the resin materials used as the first resin material M1, the second resin material M2, and the third resin material M3 were different. Conventional example was a normal tire composed of vulcanized rubber and tire cords, and having a carcass, a belt cord layer, a band cord layer, a chafer rubber, an apex rubber, an inner liner rubber, an inner insulation rubber, a breaker cushion rubber, a breaker edge strip rubber, a tread rubber, an under tread rubber, a sidewall rubber, and a clinch rubber.

For each of the comparative examples and embodiments, bead cores and tread reinforcing components having the same specifications were used. As the bead core, a tape bead structure with a steel cord was used. As the tread reinforcing component, a steel cord reinforcing layer composed of two reinforcing plies was used.

In the conventional example, comparative examples and embodiments, the contours of the tire cross-sectional shapes were the same, and the arrangement positions of the bead cores and the tread reinforcing components were also the same.

For the conventional example, comparative examples and embodiments, shape retention, ground contacting area, tread friction coefficient, steering stability (lateral spring constant), ride comfort performance (vertical spring constant) and recyclability were computed by performing a computer simulation, and compared with each other.

< Shape retention >

Total width change rate = (total tire width after inflated) / (total tire width before inflated) is expressed by an index of the reciprocal with the conventional example as 100. The larger the value, the smaller the total width change rate and the better the shape retention.

< Ground contacting area >

This is an index of the grip, and is expressed by an index with the conventional example as 100. The larger the value, the wider the ground contacting area and the better the grip.

< Tread friction coefficient >

This is an index of the grip and is the friction coefficient of the tread material obtained from a friction test, expressed by an index with the conventional example as 100. The larger the value, the larger the coefficient of friction and the better the grip.

< Steering stability (lateral spring constant) >

The lateral spring constant is expressed by an index with the conventional example as 100. The larger the value, the larger the lateral spring constant and the better the steering stability.

< Ride comfort performance (vertical spring constant) >

The vertical spring constant is expressed by an index of the reciprocal with the conventional example as 100. The larger the value, the smaller the vertical spring constant and the better the ride comfort.

< Recyclability >

Whether or not the base elastomer material can be melt-remolded. When melt remolding is possible, it is more recyclable than when melt remolding is not possible.

[Table 1]

| | conventional example | comparative example 1 | comparative example 2 | comparative example 3 | comparative example 4 | comparative example 5 | embodiment 1 | embodiment 2 |
|---|---|---|---|---|---|---|---|---|
| tire structure | vulcanized rubber | Fig.1 | Fig.1 | Fig.1 | Fig.1 | Fig.1 | Fig.1 | Fig.1 |
| first resin material M1 | - | A | H | E | A | A | A | A |
| second resin material M2 | - | A | H | A | G | F | B | B |
| third resin material M3 | - | A | H | H | E | A | C | G |
| relationship of E1,E2,E3 | - | E1=E2=E3 | E1=E2=E3 | E2<E1<E3 | E1<E3<E2 | E1=E3<E2 | E1<E2<E3 | E1<E2<E3 |
| shape retention | 100 | 42 | 149 | 69 | 126 | 106 | 82 | 83 |
| ground contacting area | 100 | 88 | 55 | 71 | 128 | 123 | 118 | 119 |
| tread friction coefficient | 100 | 100 | 88 | 45 | 96 | 96 | 96 | 96 |
| steering stability (lateral spring constant) | 100 | 64 | 121 | 145 | 69 | 31 | 103 | 124 |
| ride comfort (vertical spring constant) | 100 | 94 | 74 | 108 | 86 | 93 | 105 | 105 |
| recyclability | not possible | possible | possible | possible | possible | possible | possible | possible |

8

[Table 2]

| | embodiment 3 | embodiment 4 | embodiment 5 | embodiment 6 | embodiment 7 | embodiment 8 | comparative example 6 | comparative example 7 |
|---|---|---|---|---|---|---|---|---|
| tire structure | Fig.1 | Fig.1 | Fig.1 | Fig.1 | Fig.1 | Fig.1 | Fig.1 | Fig.1 |
| first resin material M1 | A | A | A | B | B | C | E | E |
| second resin material M2 | B | C | C | C | C | G | C | D |
| third resin material M3 | H | G | H | G | H | H | D | H |
| relationship of E1,E2,E3 | E1<E2<E3 | E1<E2<E3 | E1<E2<E3 | E1<E2<E3 | E1<E2<E3 | E1<E2<E3 | E3<E1<E2 | E2<E1<E3 |
| shape retention | 82 | 114 | 111 | 113 | 115 | 136 | 113 | 79 |
| ground contacting area | 118 | 124 | 124 | 104 | 106 | 79 | 81 | 75 |
| tread friction coefficient | 96 | 96 | 96 | 105 | 105 | 86 | 45 | 45 |
| steering stability (lateral spring constant) | 139 | 115 | 131 | 116 | 130 | 126 | 42 | 142 |
| ride comfort (vertical spring constant) | 105 | 93 | 93 | 91 | 91 | 81 | 89 | 104 |
| recyclability | possible | possible | possible | possible | possible | possible | possible | possible |

The resin materials used in Tables 1 and 2 are shown in Table 3.

[Table 3]

| resin material | name | manufacturer | tensile elastic modulus (Mpa) | type |
|---|---|---|---|---|
| A | Elastolan C60A10WN | BASF | 8.3 | polyurethane-based thermoplastic elastomer |
| B | Elastolan 1180A | BASF | 19.7 | polyurethane-based thermoplastic elastomer |
| C | Elastran 1198ATR | BASF | 74.3 | polyurethane-based thermoplastic elastomer |
| D | Mirastomer 7030s | Mitsui Chemicals | 12.4 | polyolefin-based thermoplastic elastomer |
| E | UBESTA XPA 9035 | Ube Industries | 60.7 | polyamide-based thermoplastic elastomer |
| F | UBESTA XPA 9040 | Ube Industries | 78 | polyamide-based thermoplastic elastomer |
| G | UBESTA XPA 9048 | Ube Industries | 162.9 | polyamide-based thermoplastic elastomer |
| H | UBESTA XPA 9055 | Ube Industries | 280 | polyamide-based thermoplastic elastomer |

As shown in Tables 1 and 2, it can be confirmed that the embodiments could achieve both the steering stability and the ride comfort while ensuring excellent recyclability.

**Description of the signs**

1 pneumatic tire

2 tire framework member

3 ground contacting tread component

4 tread reinforcing component

5 bead portion

6 sidewall portion

7 under tread portion

11 reinforcing cord

12 cord reinforcing layer

15 resin reinforcing layer

M1 first resin material

M2 second resin material

M3   third resin material

**Claims**

1.  A pneumatic tire comprising a toroidal tire framework member comprising a pair of bead portions, a pair of sidewall portions, and an under tread portion connecting the pair of sidewall portions, and a ground contacting tread component disposed outside the under tread portion in the tire radial direction,

    wherein
    the ground contacting tread component is made of a first resin material, the pair of sidewall portions and the under tread portion are made of a second resin material,
    the pair of bead portions are made of a third resin material, and
    the tensile elastic moduli E1 to E3 of the first to third resin materials, respectively, satisfy the following equation (1)

$$E1 < E2 < E3 \dots (1).$$

2.  The pneumatic tire as set forth in claim 1, wherein a tread reinforcing component is disposed between the ground contacting tread component and the under tread portion.

3.  The pneumatic tire as set forth in claim 2, wherein the tread reinforcing component includes a cord reinforcing layer in which reinforcing cords are arranged.

4.  The pneumatic tire as set forth in claim 2 or 3, wherein the tread reinforcing component includes a resin reinforcing layer made of a fourth resin material different from the first to third resin materials.

5.  The pneumatic tire as set forth in any one of claims 1 to 4, wherein the following equations (2) and (3) are further satisfied,

$$10 \text{ x } E1 > E2 \dots (2)$$

$$10 \text{ x } E2 > E3 \dots (3).$$

6.  The pneumatic tire as set forth in any one of claims 1 to 5, wherein the tensile elastic modulus E1 is in a range of 5 to 20 MPa.

7.  The pneumatic tire as set forth in any one of claims 1 to 6, wherein the tensile elastic modulus E2 is in a range of 10 to 100 MPa.

8.  The pneumatic tire as set forth in any one of claims 1 to 7, wherein the tensile elastic modulus E3 is in a range of 50 to 500 MPa.

FIG. 1

# FIG. 2

FIG. 3

FIG. 4

# FIG. 5

(a)

(b)

(c)

## INTERNATIONAL SEARCH REPORT

International application No.

PCT/JP2020/034952

### A. CLASSIFICATION OF SUBJECT MATTER
Int. Cl. B60C5/01(2006.01)i, B60C9/18(2006.01)i
FI: B60C5/01 A, B60C9/18 E, B60C9/18 D

According to International Patent Classification (IPC) or to both national classification and IPC

### B. FIELDS SEARCHED
Minimum documentation searched (classification system followed by classification symbols)
Int. Cl. B60C5/01, B60C9/18

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2015-231814 A (BRIDGESTONE CORP.) 24 December 2015, entire text, all drawings | 1-8 |
| A | JP 2016-128298 A (BRIDGESTONE CORP.) 14 July 2016, entire text, all drawings | 1-8 |
| A | WO 2017/061268 A1 (BRIDGESTONE CORP.) 13 April 2017, entire text, all drawings | 1-8 |
| A | JP 2013-252746 A (BRIDGESTONE CORP.) 19 December 2013, entire text, all drawings | 1-8 |
| A | JP 2003-104006 A (THE YOKOHAMA RUBBER CO., LTD.) 09 April 2003, entire text, all drawings | 1-8 |

☒ Further documents are listed in the continuation of Box C.     ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12.11.2020 | 24.11.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

| International application No. |
|---|
| PCT/JP2020/034952 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2016-101807 A (TOYO TIRE AND RUBBER CO., LTD.) 02 June 2016, entire text, all drawings | 1-8 |
| A | JP 2016-56375 A (BRIDGESTONE CORP.) 21 April 2016, entire text, all drawings | 1-8 |

Form PCT/ISA/210 (continuation of second sheet) (January 2015)

**INTERNATIONAL SEARCH REPORT**

Information on patent family members

| International application No. |
|---|
| PCT/JP2020/034952 |

| Patent Documents referred to in the Report | Publication Date | Patent Family | Publication Date |
|---|---|---|---|
| JP 2015-231814 A | 24.12.2015 | (Family: none) | |
| JP 2016-128298 A | 14.07.2016 | (Family: none) | |
| WO 2017/061268 A1 | 13.04.2017 | US 2018/0281329 A1 claims, examples, figures EP 3360695 A1 CN 108136832 A | |
| JP 2013-252746 A | 19.12.2013 | (Family: none) | |
| JP 2003-104006 A | 09.04.2003 | (Family: none) | |
| JP 2016-101807 A | 02.06.2016 | (Family: none) | |
| JP 2016-56375 A | 21.04.2016 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6138695 B